# NEW EUROPEAN PATENT SPECIFICATION

(11) **EP 0 684 132 B2**
(45) Date of publication and mention of the opposition decision: **02.06.2010**
(45) Mention of the grant of the patent: 12.07.2000
(21) Application number: 94401168.3
(22) Date of filing: 26.05.1994
(51) Int. Cl.: D21H 27/30, B32B 37/00, B32B 37/12, B32B 37/18

(54) **Method for manufacturing of a multi-ply tissue paper product**
Verfahren zur Herstellung eines mehrschichtigen Tissuepapierproduktes
Procédé de fabrication d'un produit de papier tissu multicouche

(43) Date of publication of application: 29.11.1995
(73) Proprietor: Georgia-Pacific Nederland B.V., 5430 AB Cuijk (NL)
(72) Inventor: Van den Beld, Jo, NL-7020 AA Zelhem (NL)
(74) Representative: David, Daniel

(56) References cited:
- EP-B- 0 674 990
- CH-A- 271 135
- DE-A- 2 324 862
- FR-A- 1 446 235
- FR-A- 2 075 453
- FR-A- 2 698 314
- GB-A- 363 699
- GB-A- 1 367 959
- US-A- 1 167 603
- US-A- 2 897 108
- US-A- 3 672 949
- US-A- 3 673 060
- US-A- 3 684 603
- US-A- 4 307 141
- PATENT ABSTRACTS OF JAPAN vol. 16, no. 6 (C-900) 9 January 1992 & JP-A-03 231 663 (ZUIKOU KK) 15 October 1991

## Description

The invention relates to a process for manufacturing a multi-ply paper product such as a napkin and with the particular purpose of producing a printed border embossed paper product.

Multi-ply tissue paper napkins are well known. They comprise usually two or three superimposed plies of soft absorbent tissue paper, which, when they are secured together, are emboss bonded along their periphery. The use of emboss bonding of the periphery not only secures the plies together but also provides a decorative pattern.

A method for manufacturing such product consists of introducing the superimposed plies into the nip defined by a pair of embossing rollers arranged for synchronized rotation about parallel cross machine axes.

The first roller is a steel roller having male embossing elements and the second roll has female embossing elements which are matched to the male elements of the first roll. The elements are arranged according to a pattern corresponding to the desired pattern on the finish product.

Although commonly used, this method of bonding the plies together is not totally satisfactory:
- In order to decorate the napkin, one of its surfaces may be totally or partially printed. The napkin is usually printed, e.g. by flexography, after the different plies have been superimposed but before emboss bonding. In this case, the top layer receiving the ink has the tendency to shrink more than the second or third ply, resulting in poor performance from the emboss bonding. There may be no bond left between the plies at the end of the manufacturing process after the napkins have been folded and wrapped.
   During the printing process ink may migrate through the first ply and reach the underlying ply. It follows that any displacement between the layers duping the subsequent steps results in the formation of so-called shadow prinking.
- In order to obtain a strong enough bond, embossing should be quite sharp and deep ; embossed peripheric parts are consequently thicker than the non-embossed central part. This difference in thickness becomes noticeable when folded napkins are stacked in 50 or 150 piece packs. The resulting package is not square but sloping.

Moreover it is noted that because of the high pressure applied on the material, embossed borders that are parallel to the machine direction are longer than the non embossed adjacent part. This difference in length causes the embossed parts to wrinkle and crease.

FR-A-2075453 relates to the production of a multiply tissue paper. According to this process the webs are embossed before laminating. US-A-3684603 discloses making two-sided towel. One ply is embossed and the second ply is laminated to the first one and glued according to the embossements.

US 3673060 relates to an adhesively laminated creped tissue product. Such a product is embossed about its periphery.

The purpose of the invention is to solve the above problems.

The invention comprises a method for manufacturing such absorbent tissue paper products. The manufacturing method comprises the following stages; first, glue is applied to a first web of absorbent tissue paper according to a gluing pattern the dimensions of which allow a bond to be formed close to the edges of the product then applying a second web of absorbent tissue paper so that a portion of said glue transferred to said second web partially sets and forms a bond between said webs. The laminate is directed to a printing group comprising one or more printing units and printed on one of its surfaces. The laminate thereinafter is embossed between a pair of embossing rollers along a pattern close to the edges of the finished product. The laminate is cut into the finished product.

The adhesive may be any of those used in the field of sanitary and domestic papers, e.g. a water based adhesive such as a polyvinylic alcohol.

The glued area may be equivalent in area to the embossed periphery area but it is may be smaller, if the bond is strong enough for the purpose of the invention.

By providing an adhesive bond it is no longer necessary to emboss the web deeply Embossing is retained only for its visual effect.

The resulting napkins have a more uniform thickness, and a better appearance. Moreover it is now possible to choose an embossing pattern only for aesthetical reasons, it does not need to provide a strong bonding effect.

As adhesive imparts rigidity to the laminate, when the napkin lies on a table it is completely flat instead of lying unevenly. But because adhesive is limited to the edges, the napkin remains soft and supple in the centre.

Gluing the plies together before printing prevents displacement of the plies and thus solves the problem of shadow printing. Moreover the bond is strong enough to resist delamination because of shrinking of the printed layer.

The accompanying drawings illustrate the invention and together with the description serve to explain the principles of the invention.
- Figure 1 is a schematic representation of an apparatus that incorporates the features of the invention.
- Figure 2 is a representation of a napkin- with embossed pattern around the edge.
- Figure 3 is a schematic representation of an embossing set.

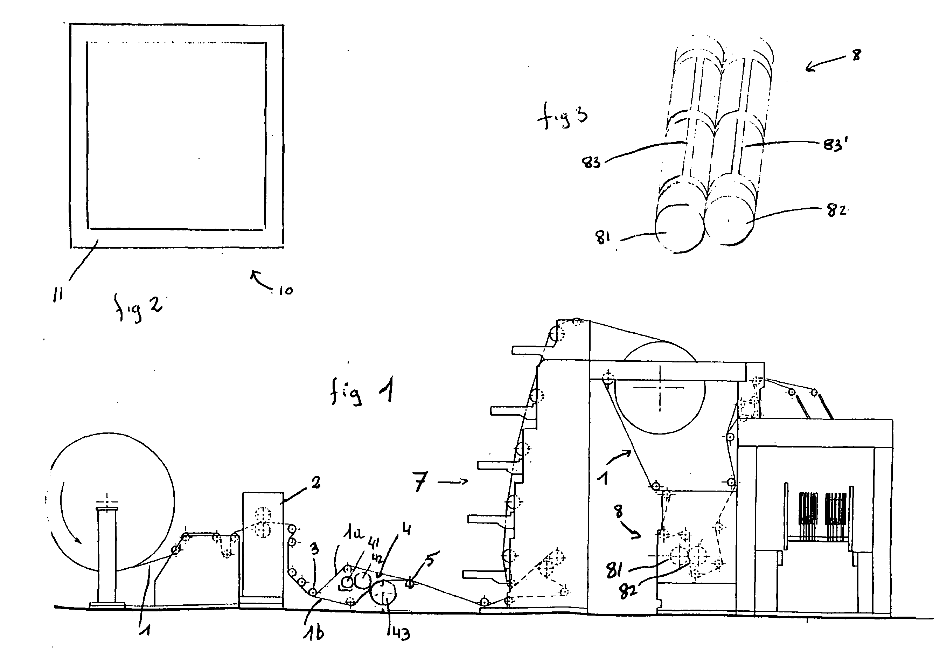

Reference is made to figure 1 which represents a schematic view of an apparatus constructed according to the invention.

A web (1) composed of two (1a, 1b) or three (1a, 1b, 1c) plies of absorbent tissue paper of any well-known type in the art, is fed to a calendering unit (2) and then is separated by passing around rollers (3). The bottom ply (1b) in a two-ply (1a, 1b) web (or the bottom plies (1b, 1c) in a three-ply web) is directed to a gluing unit (4) and the top ply (1a) is led over the unit (4).

The gluing unit applies adhesive according to a predetermined pattern following the edge of the finished product.

The gluing unit comprises a metering roller (41) that supplies a controlled, metered fine film of liquid adhesive from a reservoir to a pattern roller (42). The pattern roller may be constructed of steel with a rubber impression mat provided on its surface. The mat has portions of its surface raised in accordance with said predetermined pattern. The mat makes contact with the surface of the metering roller, thereby effecting transfer of a controlled quantity of adhesive to the raised portions of the mat at such points of contact.

The ply (1b) is passed through the nip between the pattern roller and a smooth steel impression roller (43). Adhesive is laid down on the web in accordance with the pattern of raised portions of the pattern roller. For the manufacture of square shaped napkins, it is in the form and has the dimensions of a narrow strip parallel and close to the edges of the desired napkin. The adhesive carrying web is then passed around the roller (5).

Simultaneously, the first ply (1a) is also guided around the roller (5) and overlaid on the web (1b). As the two webs contact one another, a portion of the adhesive is transferred to web (1a), partially setting and forming a bond between the webs. Between rollers (3), (5) webs (1a) and (1b) have preferably maintained the same length so that they present no differential stretch when they are united.

The laminate (1) is passed to a printing station (7) composed of one or more printing units for printing a design on the product or fully printing as required.

After printing and drying the laminate is directed to an embossing station (8). The set of embossing rollers comprises a steel embossing roller (81) and a mating roller (82). Roller (81) has its cylindrical surface engraved with a pattern of projections (83) and roller (82) is provided with a respective mating pattern of depressions (83') to receive such projections so that when a tissue web is passed through the nip between said rolls the web is embossed with the pattern. Figure 3 represents such an embossing set for embossing parallel series of napkins. As shown in the figure (2) the pattern forms a strip (11) extending about the periphery of the finish product (10).

Then the laminate leaves the embossing unit and is passed to the converting, folding, cutting and wrapping station.

## Claims

1. A process for manufacturing an absorbent tissue paper product having a peripheric edge, with multiple webs attached by a bond close to said edge,
**characterized in that** it comprises the following processing stages :
- applying glue to a first web of absorbent tissue paper according to a gluing pattern, said gluing pattern having predetermined dimensions to form a bond only along the edge of the finished paper product,
- applying a second web of absorbent tissue paper, superimposed one said first web so that a portion of said glue transferred to said second web partially sets and forms a bond between said webs, to form a laminate joined together according to said gluing pattern,
- directing said laminate to a printing group comprising one or more printing units, and printing on one of its surfaces,
- directing said printed laminate to an embossing station,
- embossing said laminate by introducing said laminate into a nip defined by a pair of rollers of said embossing station according to an embossing pattern along the edge of the finished paper product,
- cutting said laminate into said paper product.

## Patentansprüche

1. Verfahren zur Herstellung eines absorbierenden, mit einem Außenrand versehenden Tissuepapierprodukt, mit mehreren Geweben, die durch eine Verbindung nahe dem Rand befestigt sind, **dadurch gekennzeichnet, daß** die folgenden Verfahrensschritte vorgesehen sind :
- Auftragen von Klebstoff auf ein erstes Gewebe von absorbierendem Tissuepapier nach einem Klebemuster, wobei das Klebmuster eine vorbestimmte Abmessung besitzt, um eine Verbindung nur entlang der Kante des fertigen Papierprodukts zu formen,
- Aufbringen eines zweiten Gewebes aus absorbierendem Tissuepapier, das über das erste Gewebe derart gelegt wird, daß ein Bereich des Klebestoffs, der auf das zweite Gewebe übertragen wurde, teilweise eine Verbindung zwischen den Geweben erzeugt und formt, um eine nach dem Klebemuster miteinander verbundene Schicht zu formen,
- Führen der Schicht zu einer Druckgruppe mit einer oder mehreren Druckeinheiten,
- Führen der bedruckte Schicht zu einer Prägestation,
- Prägen der Schicht nach einem Prägemuster entlang dem Rand des fertigen Papierprodukts durch Einführen der Schicht in eine durch ein Paar von Rollen der Prägestation definierte Klemmstelle,
- Schneiden der Schicht zu dem Papierprodukt.

## Revendications

1. Procédé pour fabriquer un produit en papier tissue absorbant ayant un bord périphérique, avec plusieurs plis liés entre eux par un joint à proximité dudit bord, **caractérisé en ce qu'**il comprend les étapes suivantes :
- appliquer de la colle sur un premier pli de papier tissue absorbant le long d'un motif de collage, ledit motif de collage ayant des dimensions prédéterminées pour former un joint seulement le long du bord du produit fini en papier,
- appliquer un deuxième pli de papier tissue absorbant, superposé au premier pli de telle sorte qu'une partie de ladite colle transférée sur ledit second pli, réticule partiellement et forme un joint entre lesdits plis, pour former un laminé lié ensemble le long dudit motif de collage,
- guider ledit laminé vers un groupe d'impression comprenant une ou plusieurs unités d'impression, et imprimé sur l'une de ses surfaces,
- guider ledit laminé imprimé vers une station de gaufrage,
- gaufrer ledit laminé en l'introduisant dans l'intervalle défini par une paire de cylindres de ladite station de gaufrage, selon un motif de gaufrage le long du bord du produit fini en papier,
- découper ce laminé en produit en papier.
